Europäisches Patentamt

(19) European Patent Office

Office européen des brevets

(11) Numéro de publication: **0 064 923**
**B1**

(12) **FASCICULE DE BREVET EUROPEEN**

(45) Date de publication du fascicule du brevet:
**09.04.86**

(21) Numéro de dépôt: **82400817.1**

(22) Date de dépôt: **04.05.82**

(51) Int. Cl.⁴: **H 04 L 1/02**

(54) Système de mise en phase de trains numériques et son application à la commutation desdits trains.

(30) Priorité: **06.05.81 FR 8109002**

(43) Date de publication de la demande:
**17.11.82 Bulletin 82/46**

(45) Mention de la délivrance du brevet:
**09.04.86 Bulletin 86/15**

(84) Etats contractants désignés:
**DE GB NL**

(56) Documents cités:
**EP - A - 0 022 718**
**FR - A - 2 462 065**
**US - A - 4 246 656**

(73) Titulaire: **SOCIETE ANONYME DE TELECOMMUNICATIONS, 40 avenue de New York, F-75116 Paris (FR)**

(72) Inventeur: **Ab der Halden, Charles Henri, Chemin de Toul ar Lan, F-22730 Tregastel (Cotes-du-Nord) (FR)**
Inventeur: **Berenguier, Pierre, Henri, 86, avenue Dr. A. Netter, F-75012 Paris (FR)**

(74) Mandataire: **Bloch, Robert et al, 39 avenue de Friedland, F-75008 Paris (FR)**

LIBER, STOCKHOLM 1986

## Description

La présente invention concerne la transmission numérique d'informations et plus particulièrement la mise en phase de trains numériques en vue de satisfaire un ordre de commutation, lesdits trains contenant des signaux de données identiques et des signaux d'horloge de même fréquence.

Les systèmes modernes de transmissions numériques exigent des systèmes d'exploitation, de maintenance et de sécurisation de plus en plus performants, d'autant plus que les débits croissent (2 Mbit/s, 8 Mbit/s, 34 Mbit/s, 2x34 Mbit/s, 140 Mbit/s). De telles exigences se retrouvent aussi bien dans la transmission d'informations par faisceaux hertziens que par câbles électriques ou fibres optiques.

Le dispositif de l'invention s'applique à tout système de transmission numérique véhiculant des informations numériques par deux chemins différents, le choix du chemin étant fonction de critères déterminés propres au système ou pouvant être commandé de l'extérieur.

En particulier, dans les systèmes de transmission numérique par faisceaux hertziens, aux n canaux en service est ajouté un canal de secours capable de se substituer sur toute une section de commutation à un canal indisponible. Les raisons habituelles de tels ordres de commutation sont des évanouissements, ou fadings, sur un canal de service, la maintenance ou bien des défauts.

Un dispositif de commutation de trains numériques a déjà été décrit dans la demande de brevet français 79 18 479 au nom de la demanderesse. Il évoque la nécessité que la commutation n'introduise pas de transition supplémentaire dans le signal d'horloge. En effet une telle commutation doit se faire très rapidement après une demande issue de la logique réception à la suite par exemple du résultat fourni par un appréciateur de qualité, l'ordre de commutation étant transmis grâce aux voies d'ordre. Cette commutation doit aussi se faire sans perte ni addition d'information. Cette condition est impérative car un tel défaut entrainerait des pertes de synchronisation des matériels placés en aval.

Des millions d'informations binaires (bits) pourraient ainsi être perdus. Il est de plus souhaitable que cette commutation n'introduise pas d'information erronée en particulier en cas de prise du canal de secours pour la maintenance.

La demande de brevet français 79 18 479 permet déjà d'effectuer un lissage du saut de phase d'horloge au moment de la commutation, mais seulement si ce saut n'est pas trop important.

Il est toutefois très difficile de prévoir la différence de phase des signaux d'horloge et des données de chaque canal, un canal de secours devant être opérationnel indifféremment pour n canaux de façon quasi instantanée.

En effet, les divers trains numériques présentent des décalages pouvant atteindre plusieurs périodes d'horloge du fait des différences de milieu de transmission, du vieillissement des matériels, des variations de température, etc...

Il est donc nécessaire de préparer les trains à commuter pour les adapter en phase avant de leur faire subir la commutation du brevet précité. D'autre part l'adaptation en phase des trains doit être compatible avec les gabarits admissibles par les matériels situés en aval, les jonctions par exemple.

La demande de brevet français 2 462 065, notamment, enseigne déjà de ne réaliser la commutation qu'après la mise en phase des signaux d'horloge et la mise en synchronisme des débits binaires des signaux. Un test de coïncidence y est aussi effectué, et seulement un ordre de décalage est envoyé à chaque fois qu'un nombre prédéterminé de non coincidences sont constatées et ce, jusqu'à ce qu'il y ait effectivement coincidence.

La présente invention concerne également les tests de préparation pour effectuer une demande de mise en phase des trains numériques, par exemple dans un système de commutation sur des voies de secours.

L'objet de la présente invention est également, suite aux tests et à une demande de mise en phase, d'effectuer la mise en phase proprement dite, de façon satisfaisante quel que soit le contenu des trains numériques.

L'objet de la présente invention est plus particulièrement d'une part de commander des changements de phase, d'autre part de les réaliser sans risquer de dépasser la gigue admissible pour les équipements situés en aval, pour des trains numériques à débit rapide.

A cet effet on compte des paquets de bits contenant au moins une non-coïncidence. La présente invention est caractérisée par les revendications 1, 2, ou 3. Il est connu en soi du document US-A-4 246 656 de tenir compte du nombre des non-coïncidences, dans la mesure où un compteur de coïncidences compte en sens inverse quand il y a des non-coïncidences de bits (col 5 l. 46, 67) pour rendre la système insensible aux erreurs.

Le système de l'invention permet d'effectuer une commutation rapide, d'un canal hertzien dégradé par un évanouissement, en un temps, de l'ordre de quelques millisecondes, tel que la commutation ait lieu avant que la qualité ait atteint un niveau inacceptable même pour les évanouissements les plus rapides.

Le système de l'invention du fait de son adaptation sur le canal de secours évite les problèmes de convergence liés à l'utilisation d'un dispositif de retard ne pouvant pas fonctionner sur un canal en service.

Le système de l'invention conduit à une simplification et à une économie des dispositifs de réception des canaux hertziens.

Le système de l'invention en assure la surveillance permanente, par affichage des retards, de l'équilibrage des temps de propagation des canaux hertziens et leur rééquilibrage éventuel sans coupure du trafic.

Le système de l'invention s'adapte aisément à des plages de déphasages variables plus ou moins grandes, par une simple augmentation des mémoires tampon de données sans modification des autres éléments du système.

Le système de l'invention s'adapte aisément aux diverses technologies en fonction des débits du train numérique.

D'autres avantages et caractéristiques apparaîtront à la lecture de la description suivante illustrée par les dessins annexés, sur lesquels:

La fig. 1 est une représentation par blocs d'un circuit numérique de corrélation de données selon l'invention.

La fig. 2 est un diagramme des temps de la partie rapide de la fig. 1.

La fig. 3 est un diagramme des temps de la partie lente de la fig. 1.

La fig. 4 est un diagramme des temps de la détection de non-coïncidence de deux trains numériques.

La fig. 5 est un schéma de réalisation préféré du test sur les données et sur les horloges.

La fig. 6 est un diagramme des temps relatif au circuit de la fig. 5.

La fig. 7 est une forme de réalisation préférée du circuit de la fig. 5.

La fig. 8 est un schéma illustrant l'application du dispositif des figs 1 à 7 à la commutation de trains numériques $D'_{ir} + H'_{ir}$ et $D_x + H_x$.

La fig. 9 est un schéma par blocs du dispositif de variation de phase selon l'invention.

La fig. 10 est un schéma détaillé du dispositif de variation de phase proprement dit de la fig. 9.

La fig. 11 est une représentation du code cyclique commandant le déphasage.

La fig. 12 est un diagramme des temps de déphasage variable lors d'un changement de déphasage.

La fig. 13 est un diagramme des temps de la mémoire tampon dans les cas de changement de retard du déphasage variable.

La fig. 14 est une forme de réalisation préférée du dispositif de la fig. 10.

La fig. 15 est un schéma détaillé du dispositif de commande du dispositif des figs 10 et 14, et

La fig. 16 illustre l'utilisation du dispositif de déphasage variable de l'invention appliqué à la commutation de trains numériques identiques.

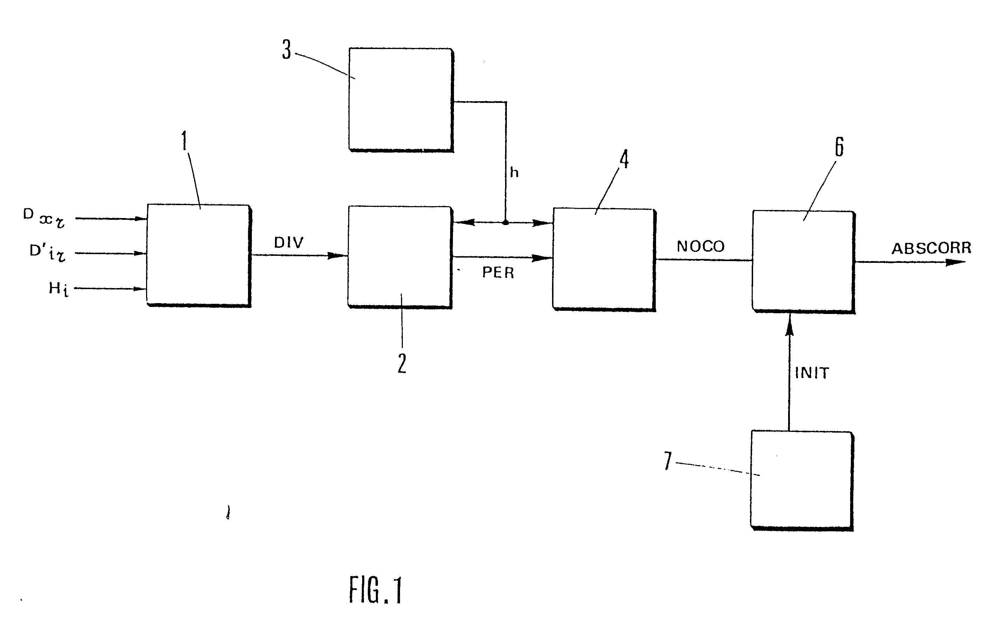

En se référant à la fig. 1, deux trains de données $D'_{ir}$ et $D_{xr}$ proviennent de deux chemins différents et devraient être identiques. On recherche, selon l'invention, la non-coïncidence des deux trains de données $D'_{ir}$ et $D_{xr}$. Un signal d'horloge $H_i$, présentant la même fréquence nominale que les signaux d'horloge $H'_{ir}$ et $H_{xr}$ desdits trains mais une phase bien déterminée, rythme le fonctionnement d'un comparateur 1 qui reçoit les signaux $D'_{ir}$ et $D_{xr}$

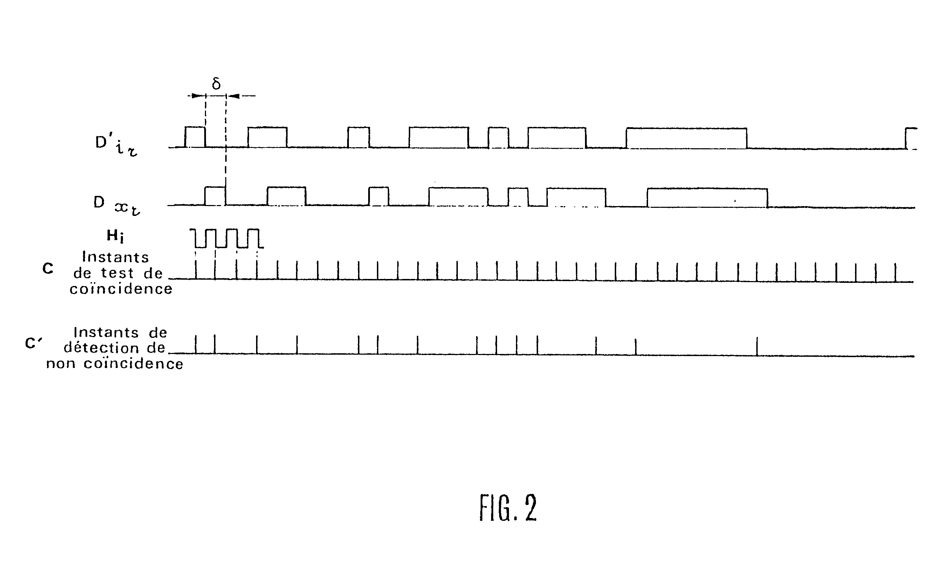

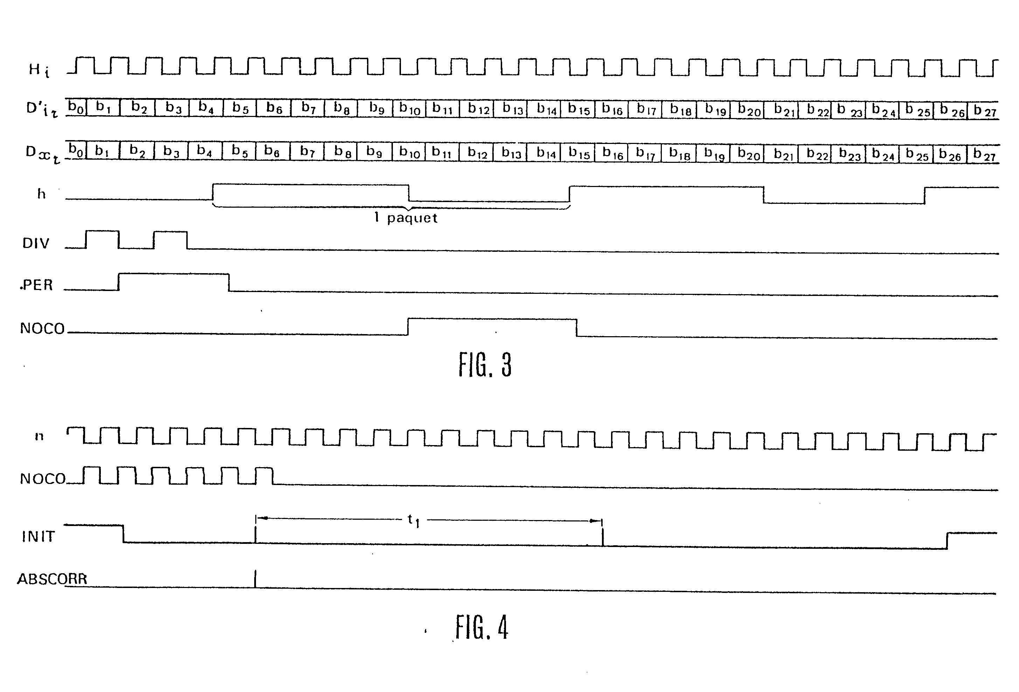

Ce comparateur 1 compare les signaux $D'_{ir}$ et $D_{xr}$ préalablement synchronisés par $H_i$ et fournit en sortie un signal DIV (divergence) représentatif du test de coïncidence des données. Pour un décalage d'un signal par rapport à l'autre (fig. 2), les instants de comparaison (signal C) correspondent aux fronts descendants du signal d'horloge $H_i$. A certains instants (signal C') de ce signal d'horloge, on détecte une non coïncidence des deux signaux de données $D'_{ir}$ et $D_{xr}$. Un autre signal de non-coincidence DIV est encore illustré par un signal non nul (bits $b_1$ et $b_3$ non identiques) sur la fig. 3.

Un oscillateur 3 indépendant, de fréquence très inférieure au rythme des trains numériques, fournit un signal carré h définissant un paquet de bits de longueur fixe p (p étant un nombre entier), correspondant à la période de ce signal h.

Le signal DIV de non-coïncidence est mis en mémoire dans un circuit de mémorisation 2 jusqu'à la fin d'un paquet défini par h'qui lui est également appliqué. En sortie, le circuit 2 fournit un signal PER (paquet erroné) indiquant qu'un paquet de bits contient au moins une non coïncidence entre les données $D_{xr}$ et $D'_{ir}$. Ainsi ce signal PER n'est pas sensible à une seconde erreur pouvant exister dans le même paquet.

Dans le circuit de mémorisation 4, le signal PER est mis en mémoire pendant la durée du paquet suivant, en appliquant le signal h à l'entrée du circuit 4.

Le circuit 4 émet en sortie une impulsion NoCo de non-coïncidence égale à 1 pendant un temps fixe prédéterminé s'il y a au moins une non coïncidence de données dans le paquet précédent. Ce temps fixe de durée d'émission de l'impulsion NoCo doit en effet être compatible avec le fonctionnement de la partie lente du dispositif de corrélation des données. La partie décrite ci-dessus formée des éléments 1, 2, 3, 4 fonctionne au rythme de $H_i$ et est une partie "rapide" volontairement réduite eu égard à la consommation énergétique.

Le signal NoCo est appliqué à l'entrée d'un compteur 6 programmable de non-coïncidence, qui compte les impulsions NoCo entre deux impulsions décalées de $t_1$ d'un signal INIT (initialisation) fournies par un compteur de temps 7. Si ce compteur 6 arrive à son compte maximum q, qui est une valeur prédéterminée, avant l'arrivée d'une autre impulsion du signal INIT, il émet une impulsion d'absence de corrélation ABSCORR en sortie (cf. fig. 4). Si l'impulsion ABSCORR se produit avant la fin du temps $t_1$, le compteur de temps 7 est initialisé. Dans ce cas, et quand le compteur 7 arrive à $t_1$, une impulsion INIT va initialiser le compteur programmable 6. Le temps $t_1$ est choisi pour garantir la reconnaissance de l'absence de corrélation sur le train le plus pauvre en transitions. En effet les données véhiculées normalement par les faisceaux hertziens contiennent une trame de données proprement dites et un certain nombre de mots ou de bits d'insertion systématique. Ainsi, la fréquence du signal h, donc la longueur d'un paquet, est l'un des paramètres permettant d'optimiser le corrélateur selon l'invention. La longueur d'un paquet doit tenir compte de la richesse en transitions des données considérées ainsi que de leur répartition temporelle. La fig. 3 représente un cas particulier où la longueur p d'un paquet est égale à 10 bits.

De la même façon, le paramètre q, comptant les impulsions NoCo entre deux impulsions INIT, est choisi de telle sorte que le corrélateur selon l'invention soit insensible aux erreurs pouvant exister sur les données et pour que pq soit compatible avec les gabarits de gigue admissibles.

Un tel dispositif corrélateur de données selon l'invention est avantageusement appliqué dans le cas d'une demande de commutation de faisceaux pour autoriser une demande $Tr_i$ de commutation issue d'une voie d'ordre i signifiant que le canal i souhaite être en secours ou s'il l'est déjà, qu'il ne souhaite plus l'être. Le signal $Tr_i$ est à 1 lorsque le canal i est en reception normale et à 0 lorsque le canal i est secouru. Appelons x le canal secours. Alors, le train $D'_{ir}$ associé à son horloge $H'_{ir}$ est comparé au train $D_{xr}$ associé à son horloge $H_{xr}$.

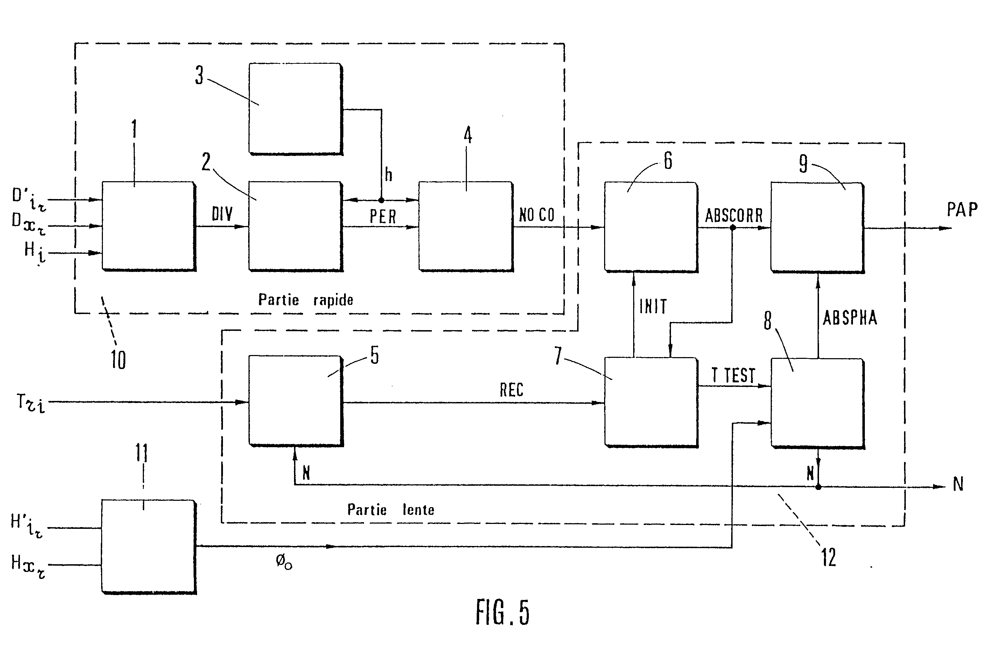

Sur la fig. 5, on a représenté un dispositif 11 discriminateur de phase d'horloge qui reçoit les signaux d'horloge $H_{xr}$ et $H'_{ir}$ et fournit en sortie un signal $Ø_0$ représentatif du déphasage entre les horloges des deux trains.

Ainsi tandis que le dispositif corrélateur numérique 10, comprenant les éléments 1, 2, 3 et 4 de la fig. 1, teste les non-coïncidences des données, le discriminateur de phase d'horloge 11 fournit un état du déphasage des horloges à l'entrée d'un circuit de décision 8.

Si $Ø_0 = 0$, il y a un déphasage inacceptable car trop important et le circuit 8 délivre un signal ABSPHA, signifiant l'absence de mise en phase des horloges des deux trains numériques, à l'entrée d'un circuit d'aiguillage 9 qui à son tour produit en sortie une impulsion PAP (pas à pas) significative d'une mauvaise phase.

Le circuit 8 fournit également en partie, lorsque la phase est mauvaise, un signal N non nul, N = 0 signifiant que les signaux sont en phase, qui est appliqué à l'entrée d'un circuit de comparaison 5 qui reçoit également le signal $Tr_i$ de demande de commutation du canal i. Le signal N indique dans quel état est la commutation: si N = 1, le canal i est en transmission normale, si N = 0 le canal x de secours est en service. Quand $Tr_i$ et N ne sont pas dans le même état, le circuit de comparaison 5 fournit un signal REC (recherche) autorisant la recherche de la bonne position de la phase du canal secours. Ce signal REC est appliqué à l'entrée du compteur de temps 7 et sert à l'initialiser. On a vu, à l'aide de la fig. 1, que le compteur programmable 6 de non-coïncidence compte les impulsions NoCo entre deux impulsions INIT fournies par ce compteur de temps 7 et que s'il arrive à son compte maximum q avant l'arrivée de INIT, il émet une impulsion d'absence de corrélation ABSCORR à sa sortie, signifiant que les données ne sont pas dans une bonne relation de phase. Ce signal ABSCORR, également appliqué à l'entrée du circuit d'aiguillage 9, permet également de délivrer une impulsion PAP en sortie.

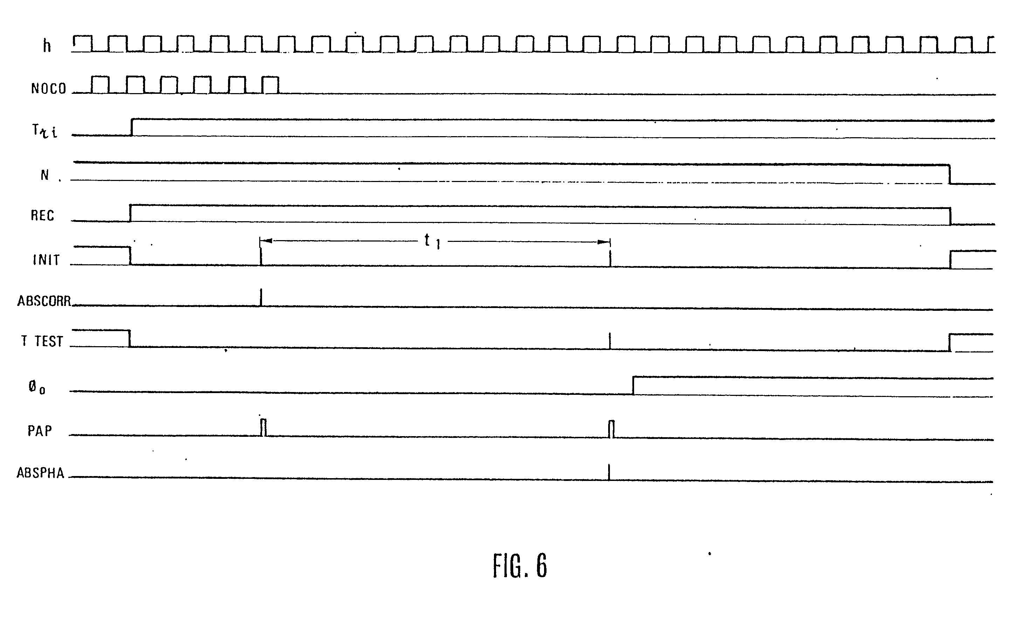

Le signal ABSCORR initialise le compteur de temps 7. Si au bout d'un temps $t_1$ il n'y a pas eu d'autre impulsion ABSCORR, une impulsion TTEST est appliquée par ce compteur 7 à l'entrée du circuit 8. Ce circuit 8 peut alors, suivant l'état de $Ø_0$ fourni par le discriminateur d'horloge 11, libérer une impulsion PAP à la sortie du circuit 9 en lui appliquant une impulsion ABSPHA représentative d'une mauvaise phase (cf. fig. 6).

Ainsi, le corrélateur 10 de l'invention permet de tester très vite, il fonctionne au rythme $H_i$, la relation, et souvent la mauvaise relation, de phase entre les deux trains numériques, sans attendre que le discriminateur de phase 11, plus lent, ne donne son résultat. Le choix de q impulsions permettant de délivrer PAP est tel que l'on se protège des erreurs éventuelles sur les données ainsi que de la gigue. Le temps minimum de test de données sur une position est donc pqiu, iu étant égal à la période du signal $H_i$.

Inversement, un bon résultat sur les données peut encore être confirmé par un test de phase $Ø_0$ au bout du temps $t_1$. Les temps $t_1$ de test sont jointifs et sont choisis d'une durée compatible avec les technologies des dispositifs 10, 11 et 12.

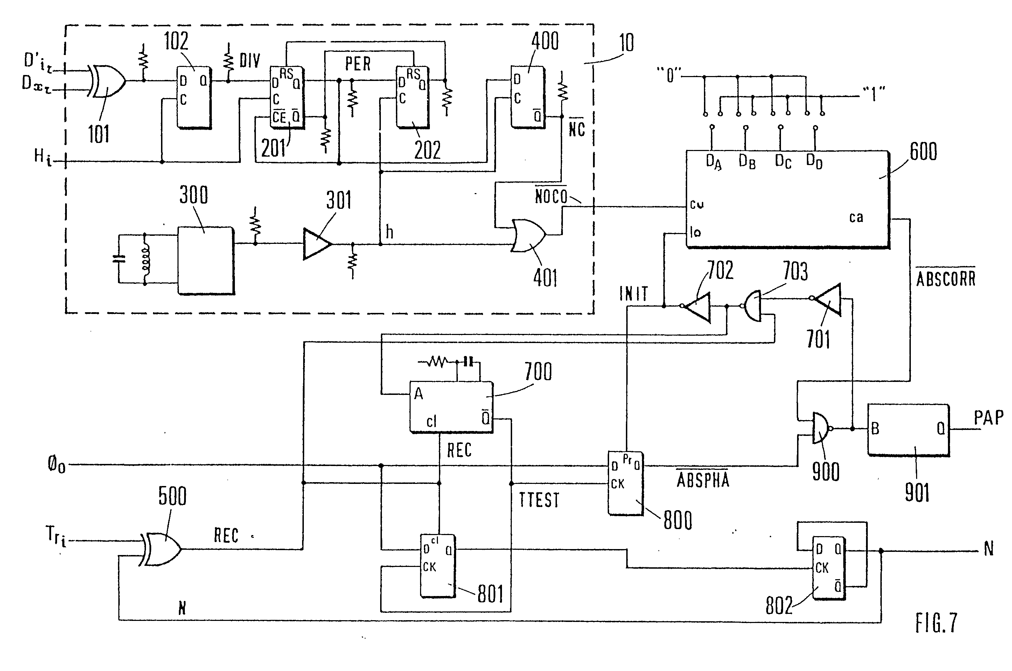

La fig. 7 illustre un exemple de réalisation préféré de l'invention.

Le dispositif de corrélation 10 comprend un circuit de comparaison 1 fournissant le signal DIV. Ce circuit de comparaison 1 comprend une porte "OU exclusif" 101, recevant $D'_{ir}$ et $D_{xr}$, une bascule 102 dont une entrée D est reliée à la sortie de la porte 101 et dont l'autre entrée C est reliée à l'horloge $H_i$. Le signal DIV est disponible sur la sortie Q de la bascule 102.

Le circuit de mémorisation 2 de la fig. 5 comprend des bascules 201 et 202. La bascule 201 reçoit les signaux DIV sur une entrée D, et $H_i$ sur son entrée horloge C. Sur sa sortie Q, le signal PER est disponible. La sortie Q est reliée à l'entrée $\overline{CE}$ (inverse de "clock enable") de la même bascule, assurant le blocage de la bascule 201 à l'état "1".

La bascule 202 reçoit le signal PER sur son entrée D et le signal h, représentatif d'un paquet, sur son entrée horloge C. Sa sortie Q est reliée à l'entrée "reset" de la bascule 201. Son entrée "reset" est reliée à la sortie $\overline{Q}$ de la bascule 201. Cette interconnexion garantit que, $H_i$ et h étant indépendants, PER est remis à zéro avec le front de montée du signal h, tout en laissant à la bascule 400 le temps de mémoriser l'information PER.

L'oscillateur 3 de la fig. 5 comprend un circuit classique 300 d'oscillateur LC (condensateur, inductance.) dont la sortie est reliée à l'entrée d'un circuit séparateur 301. A la sortie de celui-ci, le signal h est disponible.

Le circuit de mémorisation 4 de la fig. 5 comprend une bascule 400 et une porte OU 401. La bascule 400 reçoit sur son entrée D le signal PER issu de la bascule 201 et h sur son entrée horloge C. Sa sortie $\overline{Q}$ fournit le signal $\overline{NC}$ à la porte 401 dont l'autre entrée reçoit le signal h.

Cette porte "OU" 401 fournit en sortie le signal $\bar{N}\bar{o}\bar{C}\bar{o}$ qui délimite également la partie rapide 10 du corrélateur.

La partie lente 12 de ce corrélateur se compose d'un compteur programmable 6 comprenant un circuit 600 qui compte les impulsions $\bar{N}\bar{o}\bar{C}\bar{o}$ reçues sur son entrée "count up". Son entrée "load" reçoit le signal INIT qui l'initialise à une valeur dépendant du câblage des entrées $D_A$, $D_B$, $D_C$ et $D_D$. L'impulsion ABSCORR, disponible sur la sortie "carry" de ce circuit 600 indique que le compteur est arrivé au bout de son comptage.

Le circuit de comparaison 5 de la fig. 5 comporte une porte "OU exclusif" 500 recevant sur ses entrées les signaux $TR_i$ et N et fournissant le signal REC en sortie.

Le compteur de temps 7 de la fig. 5 comprend une bascule monostable 700, des inverseurs 701 et 702 et une porte ET 703.

Le monostable 700 est déclenché par le signal REC arrivant à son entrée "clear". Le signal TTEST est disponible à sa sortie $\bar{Q}$. L'inverseur 701 reçoit le signal de sortie d'une porte ET 900, évoquée plus loin, et fournit en sortie son inverse à l'entrée de la porte "ET" 703. L'autre entrée de cette porte 703 reçoit le signal REC.

La sortie de la porte 703 est reliée à l'entrée A du monostable 700 qu'elle réinitialise et à l'entrée de l'inverseur 702 dont la sortie fournit le signal INIT. Ce signal INIT est appliqué d'une part à l'entrée "load" du compteur programmable 600 permettant de charger celuici et à l'entrée "preset" d'une bascule 800 abordée ci-après.

Le circuit de décision 8 de la fig. 5 comporte des bascules 800, 801, et 802. Les bascules 800 et 801 reçoivent toutes deux d'une part le déphasage $\emptyset_o$ fourni par le discriminateur 11 sur leurs entrées D et d'autre part le signal TTEST venant de la sortie $\bar{Q}$ du monostable 700 sur leur entrée horloge CK. La bascule 800 est initialisée à 1 par le signal INIT arrivant sur son entrée "preset". La bascule 801 est initialisée à 0 par le signal REC arrivant sur son entrée "clear". Le signal $\bar{A}\bar{B}\bar{S}\bar{P}\bar{H}\bar{A}$ est disponible sur la sortie Q de la bascule 800 tandis que la sortie Q de la bascule 801 est raccordée à l'entrée horloge CK de la bascule 802. Celle-ci est montée en diviseur par 2 par la liaison entre sa sortie $\bar{Q}$ et son entrée D.

Le signal N est disponible sur la sortie Q de cette bascule 802 ainsi qu'à l'entrée de la porte "OU exclusif" 500 recevant sur son autre entrée le signal $TR_i$.

Le circuit d'aiguillage 9 de la fig. 5 comprend la porte 900 et une bascule monostable 901. La porte "ET" 900 a une entrée reliée à la sortie "carry" du compteur 600 et l'autre entrée reliée à la sortie de la bascule 800 recevant ainsi respectivement $\bar{A}\bar{B}\bar{S}\bar{C}\bar{O}\bar{R}\bar{R}$ et $\bar{A}\bar{B}\bar{S}\bar{P}\bar{H}\bar{A}$. La sortie de la porte 900 fournit une impulsion positive chaque fois que $\bar{A}\bar{B}\bar{S}\bar{C}\bar{O}\bar{R}\bar{R}$ ou $\bar{A}\bar{B}\bar{S}\bar{P}\bar{H}\bar{A}$ passent à zéro.

Cette sortie de la porte 900 est reliée à l'entrée B du monostable 901 qui fournit sur sa sortie Q le signal PAP, impulsion large pour chaque impulsion envoyée sur son entrée.

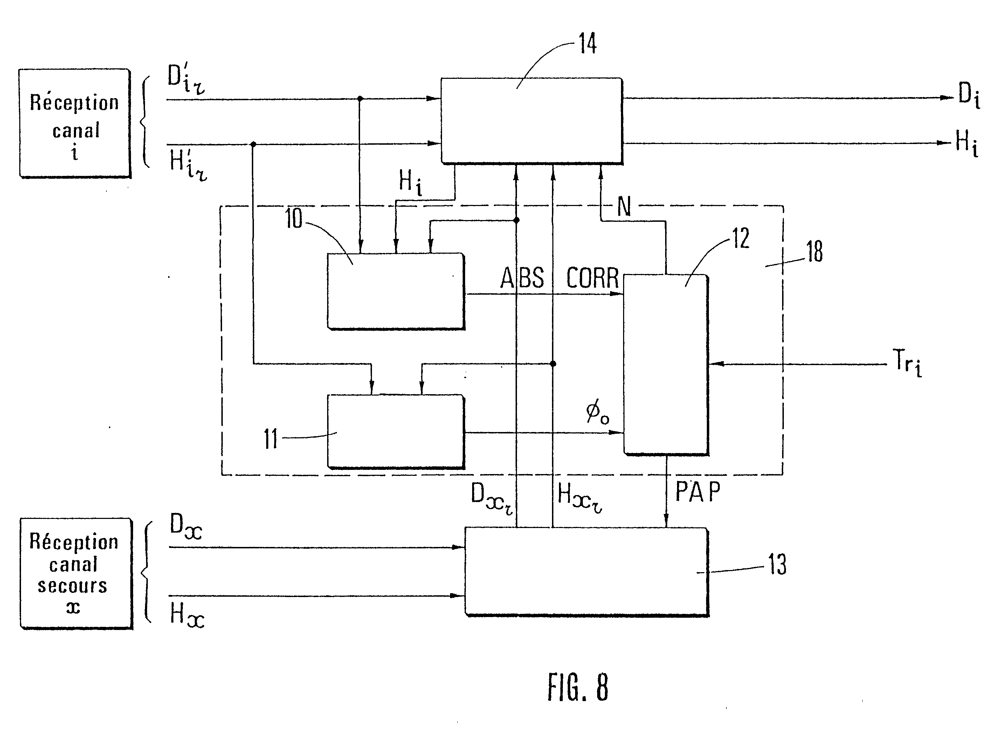

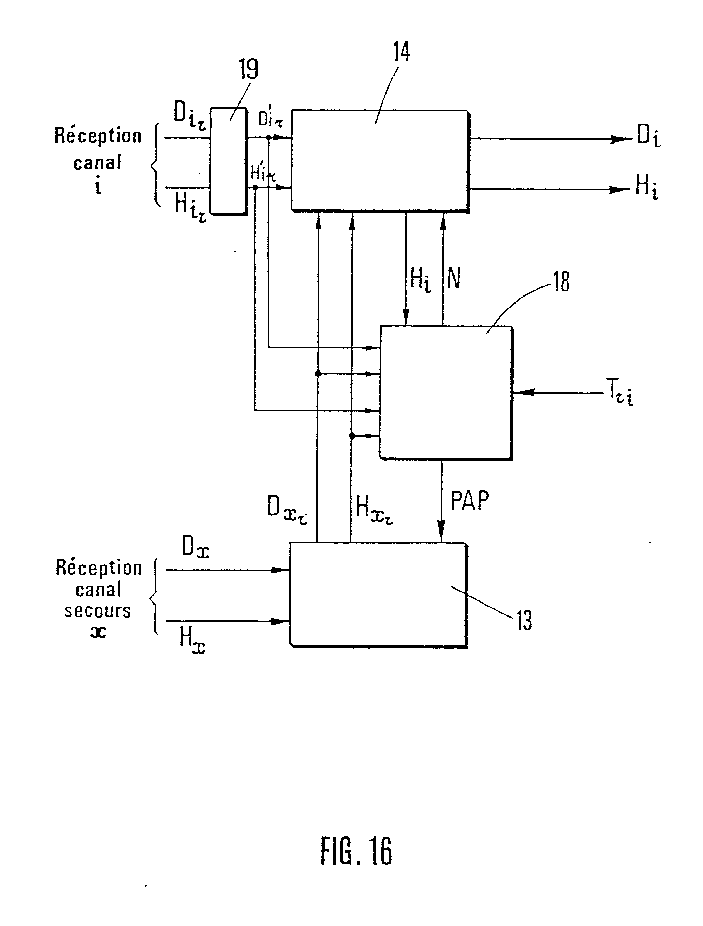

La fig. 8 illustre l'application du dispositif de mise en phase de trains numériques de l'invention à la demande de commutation desdits trains. Une demande de commutation arrive, au moyen de sa voie d'ordre $TR_i$ au niveau du dispositif logique 12, pour le canal i formé du train de données $D_{ir}$ + $H_{ir}$ et de son signal d'horloge associé. Ce train i est reçu au moyen d'un dispositif égaliseur 19 qui fournit en sortie un train $D'_{ir}$ de données associé à un signal $H'_{ir}$ d'horloge (fig. 16). Simultanément, le canal de secours x est reçu au moyen d'un dispositif 13 et adopte la phase de ces signaux $D_x$ + $H_x$ en fonction du signal PAP, pour fournir à l'entrée des dispositifs 10, 11 et 14 un train numérique $D_{xr}$ + $H_{xr}$ présentant une relation de phase correcte avec le train i demandant d'être secouru. Le dispositif 14 est avantageusement un dispositif de commutation tel que celui décrit dans la demande de brevet français 79 18 479. Ce dispositif 14 reçoit le signal N de demande de commutation fourni par le dispositif logique 12 autorisant la demande de commutation uniquement lorsque les résultats fournis par les dispositifs 10 et 11 sont satisfaisants. Ce dispositif 14 fournit également le rythme de fonctionnement $H_i$ au dispositif 10 qui est le rythme du train numérique après commutation. Les dispositifs 10, 11 et 12 ont été décrits précédemment. Le dispositif 10 permet de tester les signaux $D_{xr}$ et $D'_{ir}$ tandis que les phases $H'_{ir}$ et $H_{xr}$ sont comparées au moyen du discriminateur 11. Ceci permet, à la sortie du dispositif logique de décision 12, d'obtenir le signal PAP, impulsion large, représentative d'une mauvaise phase à l'entrée du dispositif 13 de changement de phase du canal de secours $D_{xr}$ + $H_{xr}$.

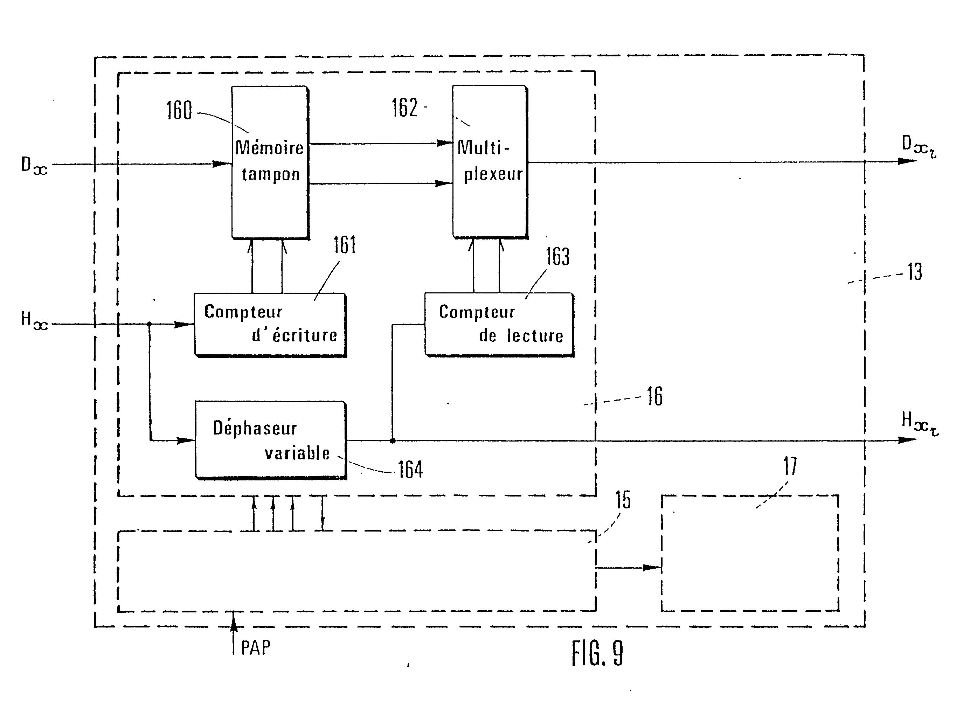

En se référant à la fig. 9, le dispositif de changement de phase 13 comporte un dispositif 15 de commande logique recevant un ordre PAP de demande de modification de phase et un dispositif 16 de modification de phase proprement dit, recevant le train numérique $H_x$ + $D_x$ entrant et fournissant en sortie un train numérique $D_{xr}$ + $H_{xr}$ sortant déphasé, à la suite d'un ordre fourni par le dispositif de commande 15. De plus, le dispositif 13 comprend un dispositif 17 d'affichage dudit déphasage en fonction du canal i considéré. Le dispositif de déphasage 16 selon l'invention, illustré sur la fig. 9, comporte une mémoire tampon 160, inscrivant en parallèle les données $D_x$ issues du canal secours au rythme d'un compteur d'écriture 161, qui reçit le signal $H_x$ de ce même canal secours. Le dephaseur variable 164 selon l'invention vise à faire varier l'horloge d'un compteur de lecture 163 par rapport à l'horloge $H_x$ du compteur d'écriture 161 d'une grandeur fournie Par ce déphaseur variable 164. Les données stockées dans la mémoire 160 sont lues et multiplexées dans un multiplexeur 162 au rythme fourni par le compteur de lecture 163, ledit multiplexeur 162 fournissant en sortie un train numérique de données $D_{xr}$.

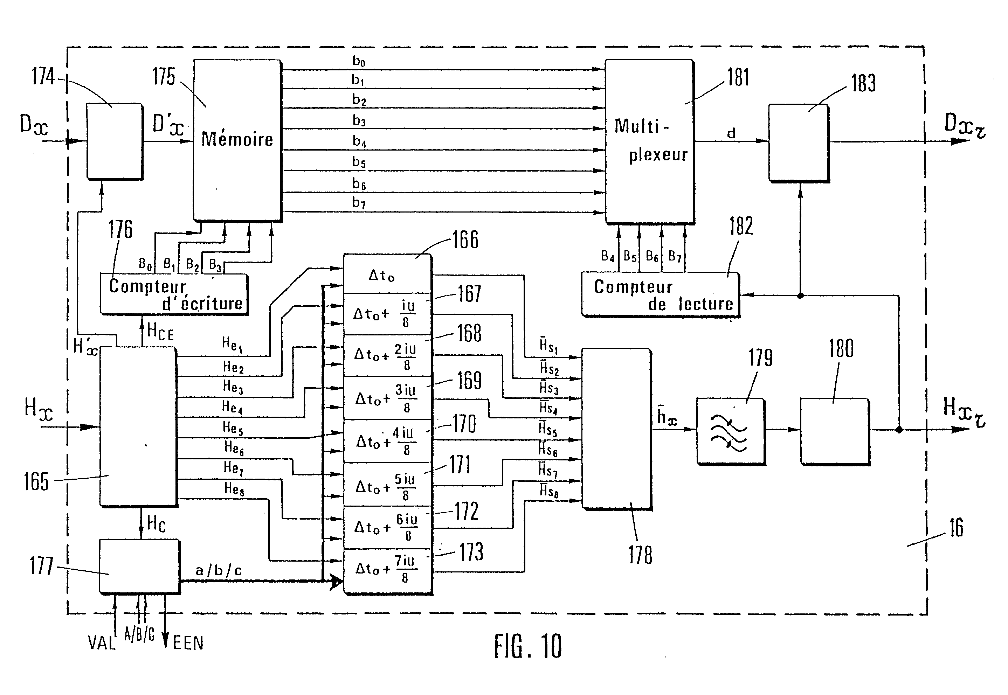

La fig. 10 représente un exemple de réalisation préféré du déphaseur variable selon l'invention.

Le déphaseur variable 164 selon l'invention vise à procurer une variation non plus continue comme dans les techniques connues mais discrète dans une plage prédéterminée. A cet effet, P déphaseurs commutables et couvrant une période en P valeurs discrètes permettent, en réponse à une demande PAP de changement de phase, de corriger le décalage des horloges. Le pas P correspondant à un saut de phase de

$$\frac{1}{P}$$

iu est une grandeur choisie de telle sorte qu'elle soit compatible avec la gigue tolérable avec les matériels situés en aval, iu étant un intervalle de temps égal à une période. Ce saut de phase peut être effectué sur le canal secours en service.

Dans la forme de réalisation de la fig. 10, on a choisi P égal à 8. En effet, c'est une grandeur se prêtant à une bonne utilisation des circuits logiques car $8 = 2^3$; en outre cette valeur de P permet de ne pas trop multiplier les organes et d'avoir un pas assez fin.

Le déphaseur 16 selon l'invention permet de faire varier la phase d'autant de périodes que l'on veut, le train numérique $D_{xr}$ sortant étant susceptible de varier dans une plage de n bits.

Le déphaseur 16 selon l'invention assure au train numérique secours un retard variable par sauts, dans un sens ou dans l'autre, le déphasage pouvant être parcouru dans les deux sens jusqu'à des butées changeant le sens de balayage aux extrémités de la plage.

Le déphasage 164 selon l'invention est laissé à la dernière position commandée par la dernière commutation.

En se referant à la fig. 10, le signal $H_x$ d'horloge arrivant du canal x secours est appliqué à l'entrée d'un circuit 165 distributeur de temps qui fournit l'horloge $H_x$ aux 8 sorties différentes $He_1$, $He_2$, $He_3$, $He_4$, $He_5$, $He_6$, $He_7$, $He_8$ avec la même phase. Ces signaux d'horloge sont appliqués à l'entrée de huit circuits 166 à 173 fournissant respectivement en sortie une horloge retardée d'une quantité $\Delta t$ de temps correspondante.

Le circuit 166 retarde de $\Delta t = \Delta t_0$.
Le circuit 167 retarde de $\Delta t = \Delta t_o +$

$$\frac{iu}{8}.$$

Le circuit 168 retarde de $\Delta t = \Delta t_o +$

$$\frac{2\ iu}{8}.$$

Le circuit 173 retarde de $\Delta t = \Delta t_o +$

$$\frac{7\ iu}{8}$$

Sont donc fournis 8 retards décalés de

$$\frac{iu}{8}\ ,$$

iu étant égal à une période d'horloge $H_{ir}$.

Un signal $H'_x$ déduit de $H_x$ par une phase appropriée est fourni par le circuit 165 et appliqué à l'entrée d'un circuit 174 de recalage de phase du train d'entrée $D_x$. Ce circuit 174 fournit un train $D'_x$ en sortie qui est appliqué à l'entrée d'une mémoire tampon 175. Un compteur d'écriture 176 reçoit le signal $H_{CE}$ qui lui sert de signal d'horloge écriture. $H_{CE}$ est déduit de $H_x$ par le circuit 165 avec une phase appropriée.

Le compteur 176 est du type Johnson, synchrone, correspondant à une solution classique pour que l'écriture des données $D'_x$ dans la mémoire 175 se fasse sans risques d'ambiguïté. Le compteur 176 produit 8 signaux synchrones $B_0$, $B_1$, $B_2$, $B_3$ et leurs compléments logiques qui fournissent huit signaux d'inscription des donnees dans la mémoire 175.

Un circuit 177 de commande mémorise les signaux A B C de commande fournis par le dispositif logique de commande 15, on y reviendra ultérieurement, au rythme de l'horloge $H_C$ fourni par le circuit 165 à partir de $H_x$, chaque fois que les signaux A, B, C sont validés par un signal VAL également fourni par le dispositif logique 15. Le circuit 177 produit un signal EEN (exécution enregistrement), qui indique que ces ordres ont été enregistrés, également à destination du dispositif 15.

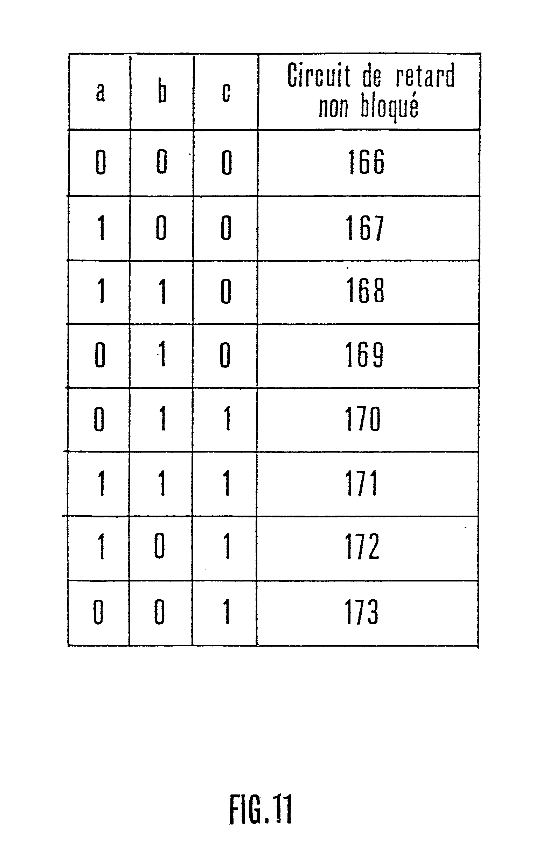

En sortie, le circuit 177 produit également des signaux a, b, c à destination des huit circuits de déphasage 166 à 173. Ces huit circuits 166 à 173 sont inhibés par l'état de abc de sorte qu'un seul soit actif à la fois. Les signaux a, b, c se déduisent de l'ordre ABC par validation de VAL. Ce code peut, par exemple, être celui illustré sur la fig. 11. Les lettres a, b et c représentent huit positions différentes des déphasages rendant un seul circuit 166 à 173 actif, pour lesquelles a, b, c représentent 1 ou 0. Le code a b c est un code cyclique tel que le passage d'un circuit à un circuit voisin se fasse sans parasite en sortie. Des huit horloges 166 à 173, une seule délivre un signal de sortie. Les sept autres sont dans un état fixe. Les signaux a, b, c changent de façon synchrone quand le circuit 166 à 173, momentanément actif, est dans son état de repos, ce qui permet de ne pas ajouter ni de retrancher de front d'horloge. C'est cela qui fixe la phase de l'horloge $H_c$ synchronisant le circuit 177. Selon la configuration ainsi décrite, on ne saute que de

$$\frac{1}{8}$$

iu à chaque nouvel ordre a b c. Les sorties des circuits 166 à 173, fournissant les signaux $\bar{H}s_1$, $\bar{H}s_2$... $\bar{H}s_8$ respectivement sont raccordées aux 8 entrées d'un circuit d'aiguillage 178. A la sortie du circuit 178 seul est disponible le signal $\bar{h}_x$ d'horloge d'entrée qui est actif. Les retards apportés ainsi aux huit signaux d'entrée doivent être identiques pour ne pas créer de parasites lors des commutations de retards. Le signal $\bar{h}_x$ sortant du circuit 178 traverse un filtre 179 passe bande à bande étroite centrée sur la fréquence nominale de $H_x$. Ce filtre 179 permet de transformer le saut de phase

$$\frac{iu}{8}$$

inévitable à chaque changement de retard en

$$\frac{miu}{8}$$

(ou

$$\frac{miu}{P}$$

dans le cas general), m étant un entier compris entre 0 et 7, un glissement de phase étalé sur plus d'une dizaine de bits étant beaucoup plus facile à accepter pour les matériels situés en aval. Il garantit de plus que le saut de phase ne fait pas apparaître ni disparaître de front d'horloge.

La sortie du filtre 179 est reliée à un circuit 180 de mise en forme qui délivre en sortie un signal $H_{xr}$ de forme compatible avec la technologie employée.

Les huit bits $b_0$, $b_1$... $b_8$ stockés dans la mémoire tampon 175 sont reçus par un multiplexeur 181 rythmé par un compteur de lecture 182. Le compteur de lecture 182 a pour horloge le signal d'horloge $H_{xr}$ fourni en sortie du circuit 180 de mise en forme. Ce compteur de lecture 182 est avantageusement du type Johnson synchrone. Il conduit à ces circuits logiques simples, à des temps de propagation faibles et permet un fonctionnement correct pour les débits élevés. Les quatre signaux de sortie de ce compteur 182, désignés par $B_4$, $B_5$, $B_6$, $B_7$, commandent le multiplexeur 181. En sortie, le multiplexeur 181 fournit un signal d qui est une reconstitution du signal de données $D_x$ retardé en phase du temps $\Delta t$ choisi.

Un circuit de recalage 183 recale en phase le signal d avec l'horloge $H_{xr}$ issue du circuit 180 et fournit en sortie le signal de données $D_{xr}$.

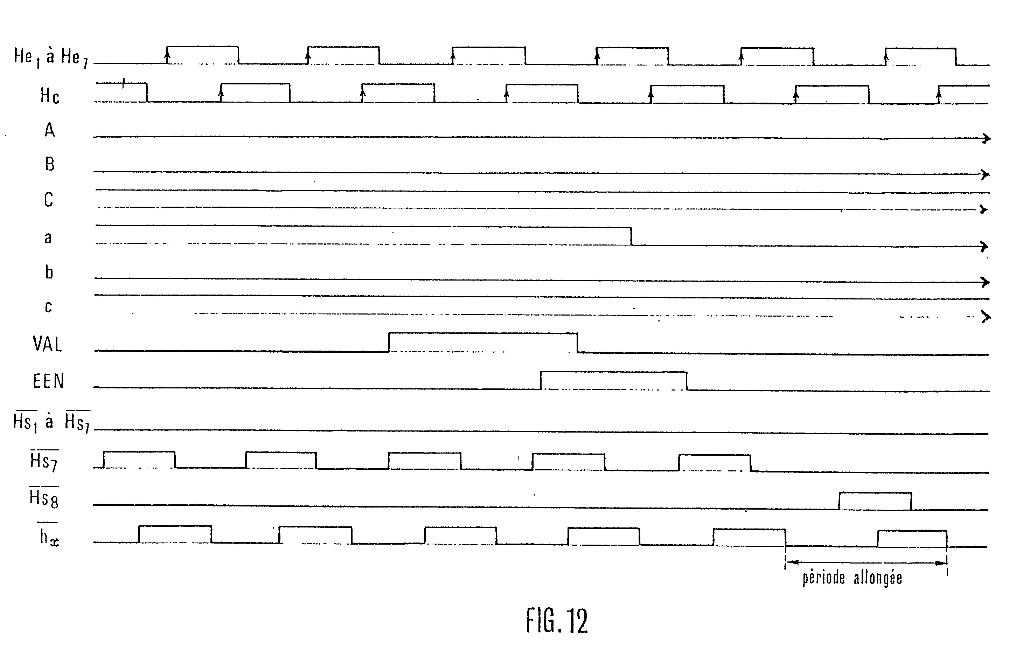

Le diagramme des temps de la fig. 12 illustre le fonctionnement du dispositif de changement de phase selon l'invention de la fig. 10. Initialement, c'est le circuit 172 qui est le seul à ne pas être bloqué. Les signaux ABC donnent le code de l'état 001 alors que a, b, c sont à l'état 101. Une validation VAL intervient produisant EEN qui doit encadrer un plateau à 1 des horloges $He_1$ à $He_8$ issues du circuit 161 en utilisant le réglage prévu dans le circuit 177. Les signaux a, b, c sont alors modifiés conformément à A B C provoquant le blocage du circuit de déPhasage 172 pendant que l'horloge H est dans le même état que l'ancien état a, b, c̄. Des flèches indiquent sur le diagramme de la fig. 12 comment les instants correspondant aux divers fronts de l'horloge et à la commutation de a, se propagent vers $\bar{H}s_7$ et $\bar{H}s_8$. La période allongée de $\bar{h}_x$ est aussi représentée.

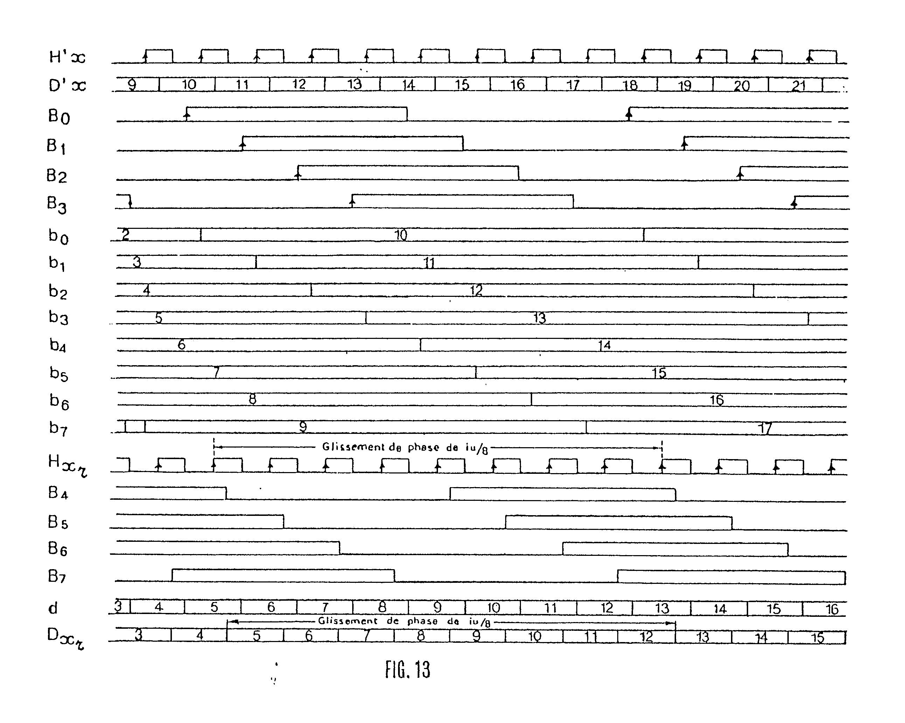

Le fonctionnement de la mémoire tampon 175 est illustré sur la fig. 13 dans le cas d'un saut de phase de

$$\frac{iu}{8} \cdot$$

Le retard apporté par la mémoire tampon 175 s'étend à peu près jusqu'au milieu de la plage possible, après le deuxième front montant du signal d'horloge $H_{xr}$. Les fronts des signaux d'horloges $B_0$ $B_1$ $B_2$ et $B_3$ fournis par le compteur d'écriture 176 décomposent le signal de données $D'_x$ en huit signaux $b_0$, $b_1$... $b_7$ en écriture dans la mémoire tampon 175. Le compteur de lecture 182 fournit quant à lui des signaux $B_4$, $B_5$, $B_6$, $B_7$ permettant de lire les signaux $b_0$, $b_1$... $b_7$ selon l'horloge $H_{xr}$ ayant subi un glissement de phase de

$$\frac{iu}{8}$$

étalé sur quelques periodes. Les sorties $B_4$, $B_5$, $B_6$, $B_7$ du compteur 182 de lecture ont subi un glissement de phase de

$$\frac{iu}{8}$$

avec le signal $H_{xr}$ d'horloge. Le train de données d reconstitué par le multiplexeur 181 a aussi glissé et après relecture par le signal d'horloge $H_{xr}$ au moyen du dispositif de calage 183, le train de données $D_{xr}$ du canal de secours est identique au train $D'_x$ mais a subi un retard de phase de

$$\frac{iu}{8} \cdot$$

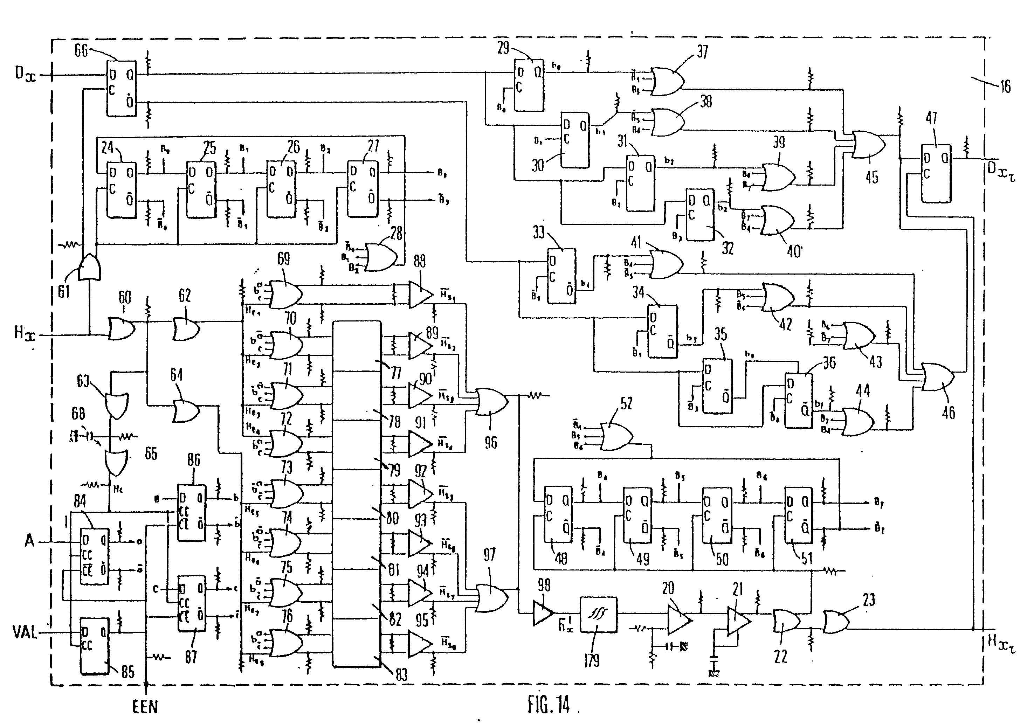

En se référant à la fig. 14, un exemple de réalisation est représenté. Le circuit de distribution des horloges, désigné par la référence 165 sur la fig. 10, comporte six portes 60, 61, 62, 63, 64, 65 montées en séparateurs. Le signal $H_x$ d'entrée arrive sur les portes 60 et 61. Les sorties directe et inverse de la porte 61 fournissent des horloges au circuit compteur d'écriture 24 et au circuit de recalage 66 respectivement. La sortie de la porte 60 est connectée à l'entrée de la porte 63. Le signal $H_c$ obtenu après traversée des portes 63 et 65 présente un retard réglé par un condensateur 68 raccordé à la sortie de la porte 63. La sortie de la porte 60 fournit aussi un signal d'horloge aux portes 62 à 64 dont les sorties sont connectées aux circuits de retard du déphaseur variable 164 de la fig. 9. Ce déphaseur variable 164 comporte huit circuits de retard 166 à 173 selon la fig. 10, recevant ainsi huit signaux d'horloge $He_1$ à $He_8$ calés en phase.

Le circuit logique 177 de la fig. 10 comporte quatre bascules 84, 85, 86, 87. Le signal $H_c$ issu de la porte 65 est relié aux entrées "common clock" de ces quatre bascules. Sur l'entrée D de la bascule 85 arrive un signal VAL de validation fourni par le dispositif de commande 15 qui sera explicité ultérieurement; sur sa sortie Q est disponible le signal EEN. Ce signal EEN est transmis au dispositif de commande 15 et est appliqué aux entrées validation horloge "clock enable" des bascules 84, 86, 87. Sur les entrées D de ces trois bascules 84, 86, 87 arrivent les signaux A/B/C respectivement fournis par le même dispositif de commande 15; ces trois bascules 84, 86, 87 fournissent respectivement sur leur sortie Q les signaux a, b, c et sur leur sortie $\bar{Q}$ les signaux ā, b̄, c̄. Ces trois dernières bascules assurent ainsi la synchronisation des signaux A, B, C sur l'horloge $H_c$ et donc sur $H_x$ d'entrée. Les différents circuits de déphasage 166 à 173 de la fig. 10 reçoivent d'une part les signaux $He_1$ à $He_8$ respectivement, d'autre part les signaux de commande a, b, c ou leur complément fournis par le dispositif 177.

Ainsi, le circuit 166 de la fig. 10 comporte une porte OU émettrice 69 et une porte réceptrice 88. La porte émettrice 69 reçoit les signaux de commande a, b, c ainsi que $He_1$. La porte receptrice 88 fournit en sortie le signal d'horloge $Hs_1$. La porte émettrice OU 70, recevant les signaux a, b, c, forme avec la porte réceptrice 89 et une ligne à retard 77, séparant les portes 70 et 89, le circuit déphaseur 167 de la fig. 10. La ligne à retard 77 assure un retard de

$$\frac{1}{8}$$

iu au signal $\bar{H}s_2$ par rapport au signal $\bar{H}s_1$. Il en est de même pour le déphaseur 168 de la fig. 10, comprenant des portes OU 71, une ligne à retard 78 et une porte 90 fournissant $\bar{H}s_3$. La porte OU 71 reçoit les signaux ā, b̄, c tandis que la ligne à retard 78 retarde de

$$\frac{2}{8}$$

iu et que la porte 90 fournit le signal $\bar{H}s_3$. Pour le circuit 169, les signaux a, b̄, c et le signal d'horloge $He_4$ sont reçus par une porte OU 72 puis retardés par une ligne de retard 79 de

$$\frac{3iu}{8}$$

puis appliquée à l'entrée d'une porte 91 qui fournit le signal $Hs_4$ en sortie.

De la même façon le circuit 170 comporte une porte OU 73, une ligne à retard 80 appliquant un retard égal à

$$\frac{4iu}{8}$$

et une porte 92 qui fournit le signal $\bar{H}s_5$ en sortie. Ensuite le circuit 171 comprend une porte OU 74, une ligne à retard 81 appliquant le retard égal à

$$\frac{5iu}{8}$$

et une porte 93 qui fournit le signal $\bar{H}s_6$ en sortie.

Puis le circuit 172 comporte une porte OU 75, une ligne à retard 82 appliquant le retard égal à

$$\frac{6iu}{8}$$

et une porte 94 qui fournit le signal $\bar{H}s_7$ en sortie.

Enfin le circuit 173 comporte une porte OU 76, une ligne à retard 83 appliquant le retard égal à

7iu
8

et une porte 95 qui fournit le signal $\bar{H}s_8$ en sortie.

Le circuit d'aiguillage 178 de la fig. 10 comporte deux portes OU 96 et 97 et un séparateur 98. La porte 96 reçoit les signaux $\bar{H}s_1$ à $\bar{H}s_4$ tandis que la porte 97 reçoit les signaux $\bar{H}s_5$ à $\bar{H}s_8$. Les sorties de ces deux portes 96 et 97 sont connectées en "OU câblé" à l'entrée d'une porte séparatrice 98 dont la sortie fournit le signal $\bar{h}_x$. Ce signal $\bar{h}_x$ est appliqué à l'entrée du filtre 179. Le circuit de mise en forme 180 de la fig. 10, raccordé à la sortie du filtre 179, comporte deux comparateurs 20 et 21 montés en cascade suivis de deux portes séparatrices 22 et 23. La sortie inverse de la porte 23 fournit le signal $H_{xr}$ de sortie.

Le compteur d'écriture 176 de la fig. 10 comporte quatre bascules 24, 25, 26, 27 montées en compteur Johnson par 8 et une porte OU 28 dont la sortie est connectée en "OU câblé' avec la sortie $\bar{Q}$ de la bascule 27 permettant d'éviter le cycle interdit du compteur.

Sur les sorties Q et $\bar{Q}$ de ces quatre bascules 24, 25, 26, 27, les signaux $B_0$, $\bar{B}_0$, $B_1$, $\bar{B}_1$, $B_2$, $\bar{B}_2$, $B_3$ et $\bar{B}_3$ sont respectivement disponibles; ils servent d'horloge aux bascules formant la mémoire tampon 175 de la fig. 10. De plus les signaux $\bar{B}_0$, $B_1$ et $B_2$ sont connectés aux entrées de la porte OU 28. La sortie inverse de cette porte 28 est appliquée à l'entrée D de la bascule 24.

Le circuit 174 de recalage de la fig. 10 comporte une bascule 66 de type D dont l'horloge est issue de la sortie inverse de la porte 61 et dont l'entrée D reçoit le signal $D_x$ de données.

Le circuit de mémoire tampon 175 de la fig. 10 comprend huit bascules 29 à 36. La sortie Q de la bascule 66 est reliée aux entrées D des quatre bascules 29 à 32 qui reçoivent respectivement pour horloge les signaux $B_0$ à $B_3$ provenant des sorties Q des bascules 24 à 27. Sur les sorties Q des bascules 29 à 32 on obtient les signaux $b_0$ à $b_3$ déjà illustrés sur la fig. 13. Pour diminuer la charge de la sortie Q de la bascule 66, sa sortie $\bar{Q}$ est connectée aux entrées D des bascules 33 à 36 qui reçoivent pour horloges les signaux $\bar{B}_0$ à $\bar{B}_3$ provenant des sorties $\bar{Q}$ des bascules 24 à 27. Sur les sorties $\bar{Q}$ des bascules 33 à 36 les signaux $b_4$ à $b_7$ sont disponibles. Le circuit de multiplexage 181 de la fig. 10 comprend dix portes "OU" 37 à 46. Une entrée de chaque porte 37 à 44 reçoit les signaux $b_0$ à $b_7$ et est reliée à l'entrée Q des bascules 29 à 32 et $\bar{Q}$ des bascules 33 à 36. Deux autres entrees de ces portes sont reliées au compteur de lecture repéré 182 sur la fig. 10. Ce compteur de lecture 182 comporte quatre bascules 48 à 51 montées en compteur Johnson par huit également, et une porte "OU" 52 dont la sortie est connectée en OU câblé avec la sortie $\bar{Q}$ de la bascule 51 afin d'éviter le cycle interdit du compteur. Sur les sorties Q et $\bar{Q}$ des quatre bascules 48 à 51 sont disponibles les signaux $B_4$, $\bar{B}_4$, $B_5$, $\bar{B}_5$, $B_6$, $\bar{B}_6$, $B_7$, $\bar{B}_7$ respectivement. Les quatre bascules 48 à 51 reçoivent sur leur entrée clock le signal disponible à la sortie directe de la porte 22. De plus les signaux $\bar{B}_4$, $B_5$ et $B_6$ sont appliqués aux entrées de la porte 52.

Ainsi la porte 37 reçoit les signaux $\bar{B}_4$ et $B_5$, la porte 38 les signaux $\bar{B}_5$ et $B_6$, la porte 39 les signaux $\bar{B}_6$ et $B_7$, la porte 40 les signaux $\bar{B}_7$ et $\bar{B}_4$. Les sorties inverses de ces quatre portes 37 à 40 sont connectées aux quatre entrées de la porte "OU" 45.

La porte 41 reçoit les signaux $B_4$ et $\bar{B}_5$, la porte 42 les signaux $B_5$ et $\bar{B}_6$, la porte 43 les signaux $B_6$ et $\bar{B}_7$, la porte 44 les signaux $B_7$ et $B_4$. Les sorties inverses de ces quatre portes 41 à 44 sont connectées à l'entrée d'une porte "OU" 46. Les sorties des portes 45 et 47 sont reliées en "OU câblé" à l'entrée D d'une bascule 47 du type D dont l'entrée "clock" reçoit le signal $H_{xr}$ d'horloge. Sur la sortie Q de cette bascule 47 est disponible un signal de données retardées $D_{xr}$ synchrone du signal d'horloge $H_{xr}$.

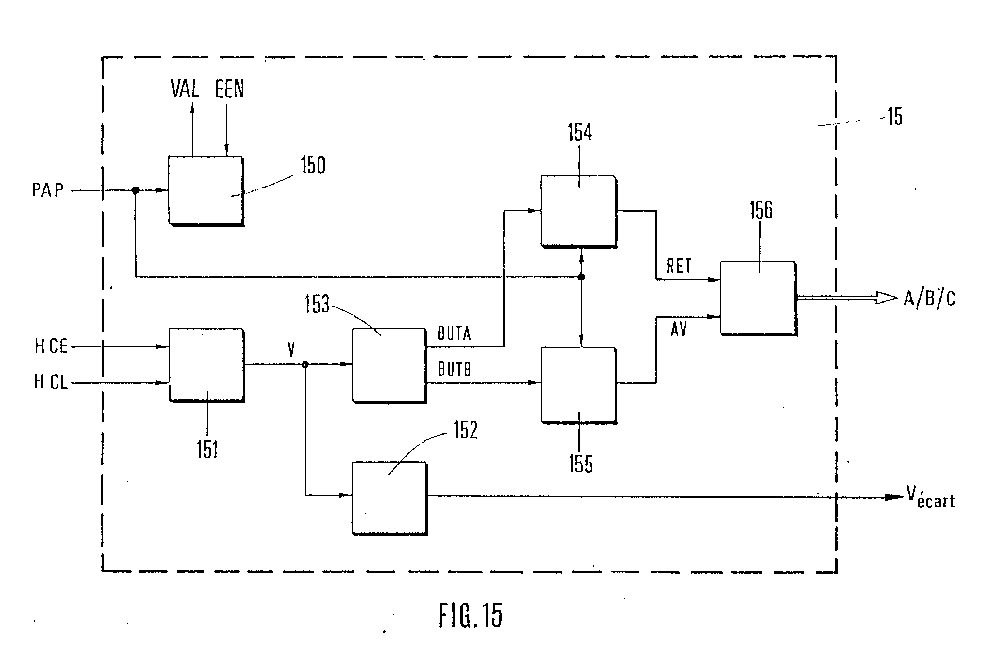

En reconsidérant les figs 9 et 10, le dispositif 15 de commande de déphasage reçoit un signal PAP de demande de changement de phase et fournit au dispositif 16 des signaux VAL et A/B/C de commande ainsi que le signal EEN. Ce dispositif 15 illustré sur la fig. 15 comporte un circuit de mémorisation 150 qui fournit un signal VAL sur le front de montée de PAP et qui est initialise par le signal EEN fourni par le dispositif 16. Le comparateur 151 de phase compare la phase de deux signaux HCE et HCL respectivement d'écriture et de lecture, déjà appliqués respectivement aux compteurs 176 et 182 de la fig. 10. Le comparateur 151 fournit en sortie une tension V telle que V soit à des valeurs extrêmes quand le décalage entre les deux compteurs 176 et 182 ne permet plus de faire une lecture correcte ou que l'on atteint les limites de la plage de variation désirée.

Le circuit 152 est un amplificateur qui amplifie et décale la tension V à une valeur "V écart" compatible avec les tensions requises pour un affichage. Ce signal "V écart" est appliqué à l'entrée d'un dispositif 17 d'affichage du retard. Cet affichage par application du signal V écart permet un contrûle et un réglage faciles de l'égalisation du canal i sans interrompre la liaison. Cette égalisation permet, dans des conditions normales de propagation, d'effectuer la commutation au milieu de la plage variable du canal secours, le signe de la variation du déphasage entre les canaux étant inconnu. Le dispositif 17 affiche avantageusement selon l'invention la valeur m du déphasage

$$\frac{miu}{p} \, \bullet$$

Un dispositif à seuil 153 reçoit également la tension V fournie par le comparateur 151 et indique en sortie quand V atteint les zones correspondant aux positions relatives incorrectes des deux compteurs. Ce comparateur 153 fournit en sortie deux signaux BUT A et BUT B qui sont deux butées A et B limitant le balayage de déphasage. Les butées A et B laissent passer le signal PAP, soit par le dispositif 154, soit par le dispositif 155. Le dispositif 154 reçoit donc outre le signal PAP, le signal BUT A et fournit en sortie un signal RET qui commandera un retard du déphasage. Au contraire le dispositif 155 reçoit outre le signal PAP un signal AV qui commandera une avance au déphasage. Le passage de RET à AV se fait par passage aux butées. Ces deux signaux RET et AV, appliqués à l'entrée d'un compteur 156, servent d'horloges de montée ou de descente pour ce compteur 156 qui fournit en sortie un signal A/B/C dont le code a déjà été décrit en référence à la fig. 11. C'est le front arrière du signal PAP qui est actif au nivcau des compteurs 154 et 155, préparant ainsi le changement de retard suivant.

Ainsi la suite discrète des retards variables

$$\frac{miu}{p} \, ,$$

m étant un nombre entier naturel, avec $1 \leqslant m \leqslant p-1$, peut être parcourue dans un sens puis dans l'autre. Les butées A et B changent le sens de balayage aux extrémités de la plage de variation.

Cette plage de n bits présentant un pas de

$$\frac{iu}{p}$$

peut être représentée sur l'affichage du dispositif d'affichage 17 au moyen de diodes. Le retard exact est lu instantanément grâce au signal "V écart".

La fig. 16 représente une application préférée du retard par saut à la commutation de trains numériques transmis par faisceaux hertziens. Si $D_{ir} + H_{ir}$ est un train numérique acheminé par canal normal qui doit être remplacé par le canal de secours $D_x + H_x$ à la suite d'un ordre $Tr_i$ transmis par la voie d'ordre, il est tout d'abord appliqué à l'entrée d'un dispositif d'égalisation 19 qui fournit en sortie un train $D'_{ir} + H'_{ir}$. Le dispositif 18 reçoit le train $D'_{ir} + H'_{ir}$, teste le déphasage de ce train par rapport au train du canal x de secours et fournit un signal PAP de demande de décalage de phase à l'entrée du dispositif 13 de déphasage. Ce dispositif 13 fournit en sortie un train numérique $D_{xr} + H_{xr}$ déphasé par rapport ü sa position d'origine. Le dispositif 18 déjà illustré sur la fig. 8 comporte le dispositif 10 corrélateur des données $D'_{ir}$ et $D_{xr}$ fournissant un signal ABSCORR à l'entrée du dispositif 12 logique, le discriminateur de phase 11 fournissant le signal $\emptyset_0$, ledit dispositif 12 délivrant le signal PAP de demande de changement de phase ou le signal N de demande de commutation. Lorsque le dispositif de test 18 a considéré comme correct le test des trains numériques, il fournit le signal N d'ordre de commutation à l'entrée du dispositif de commutation 14. Le dispositif 14 reçoit les signaux $D'_{ir} + H'_{ir}$ après l'égalisation du canal i, ainsi que les signaux $D_{xr} + H_{xr}$ du canal secours et effectue une commutation synchrone des trains pour fournir en sortie un train $D_i + H_i$ sans ajouter ni retrancher de transition juste au moment de la commutation, et ce au rythme de son signal $H_i$ propre.

En effet, le commutateur 14 précité reçoit les deux signaux $D'_{ir}$ et $D_{xr}$ synchrones. La différence de phase entre le signal $H_i$ et $H'_{ir}$ ou $H_{xr}$ aiguille est réglée de sorte que la commutation des horloges ait lieu quand $H'_{ir}$ et $H_{xr}$ sont toutes deux à l'état zéro, compte tenu de l'écart maximal

$$\frac{iu}{p}$$

de période possibie.

Un tel dispositif de changement de phase 13 peut ainsi être disposé dans la porte réception du canal secours et être utilisable lors de la commutation des n canaux pour lesquels ce canal x supplémentaire sert de secours. La présente invention permet ainsi de réaliser une simplification des équipements, une économie de réalisation et de consommation. En outre l'utilisation d'un seul dispositif de retard variable placé sur le canal de secours évite les problèmes de convergence liés à l'utilisation d'un dispositif de retard ne pouvant pas fonctionner sur un canal en service.

En outre la structure du dispositif 13 de déphasage variable de trains numériques permet d'augmenter la plage de rattrapage automatique en augmentant seulement la capacité de la mémoire tampon 175 de la fig. 10 sans modifier les autres éléments du système de commutation selon l'invention.

Le dispositif de déphasage variable selon l'invention est suffisamment rapide pour effectuer la commutation d'un canal hertzien i dégradé par un évanouissement en un temps de l'ordre de la milliseconde, donc tel que la commutation ait lieu avant que la qualité ait atteint un niveau inacceptable même pour les évanouissements les plus rapides.

En outre le dispositif de déphasage variable selon 1,in-vention garde en mémoire dans le dispositif d'affichage 17 la difference de temps de propagation ($\Delta$ t =

$$\frac{miu}{p} \; )$$

entre le canal normal secouru et le canal de secours après chaque commutation et après chaque retour au canal normal tant qu'un autre canal normal ne prend pas le secours. Une telle propriété permet un affichage aisé de la différence des temps de propagation même en service, sans utilisation de matériel de mesure encombrant et coûteux tels que des générateurs et des oscilloscopes. Ceci assure la surveillance permanente de l'équilibrage des temps de propagation des canaux hertziens et leur équilibrage éventuel sans coupure du trafic.

**Revendications**

1.- Système de mise en phase de trains numériques, comprenant un comparateur, une première mémoire raccordée à la sortie du comparateur, une deuxième mémoire (2) et un oscillateur (3) tous deux raccordés à l'entrée de la première mémoire (4), l'entrée de la deuxième mémoire (2) étant raccordée à la sortie du comparateur (1), un premier compteur (6) raccordé par une entrée à la sortie de la première mémoire (4), un circuit d'aiguillage (9) raccordé par une entrée à la sortie du premier compteur (6), un deuxième compteur (7) raccordé par une sortie à l'autre entrée du premier compteur (6), un discriminateur de phase (11), un circuit de décision (8) raccordé par une entrée à la sortie du discriminateur de phase (11), par une autre entrée au deuxième compteur (7), par une sortie à une autre entrée du circuit d'aiguillage (9) et par une autre sortie à une entrée du deuxième compteur (7), une autre entrée du deuxième compteur (7) étant raccordée à la sortie du premier compteur (6).

2.- Système de mise en phase de deux trains numériques contenant des signaux de données identiques et des signaux d'horloge de même fréquence, comportant des moyens pour, à partir des signaux de données, former des paquets successifs d'un nombre déterminé de bits, des moyens pour comparer par paquets de bits la coïncidence des signaux de données et émettre un signal de non-coïncidence (NoCo) dès la première non-coïncidence dans un paquet, des moyens pour compter les paquets comportant au moins une non-coïncidence et émettre un signal de mauvaise relation de phase des signaux de données (ABSCORR) au bout d'un nombre déterminé de tels paquets, des moyens pour mesurer les phases des signaux d'horloge et, si aucun signal de non-coïncidence (NoCo) n'a été émis pendsnt un temps déterminé, émettre un signal de mauvaise relation de phase des signaux d'horloge (ABSPHA) si les phases des signaux d'horloge ne concordent pas, et des moyens pour émettre un signal de changement de phase (PAP), soit à l'apparition d'un signal de mauvaise relation de phase des données (ABSCORR) soit à l'apparition d'un signal de mauvaise relation de phase des signaux d'horloge (ABSPHA).

3.- Système de commutation comprenant le système de mise en phase selon l'une des revendications 1 et 2, et un dispositif de changement de phase (13) pour faire varier la phase du train numérique de secours à la suite de la réception de chaque signal de demande de changement de phase (PAP).

4.- Système de commutation selon la revendication 3, caractérisé par le fait que le dispositif de changement de phase (13) est agencé pour fsire varier la phase du train numerique de secours de façon discontinue.

5.- Système de commutation selon la revendication 4, caractérisé par le fait que la variation de la phase du train numérique de secours change par saut de pas égal à

$$\frac{iu}{p} \; ,$$

p etant un nombre entier prédéterminé à ls suite de la demande de chaque signal de changement de phase (PAP) et iu étant égal à la période d'un signal de synchronisation (H$_i$).

6.- Système de commutation selon la revendication 4, caractérisé par le fait que la suite discrète des phases variables est parcourue dans un sens d'avance, puis dans un sens de retard à l'intérieur d'une plsge prédéterminée.

**Patentansprüche**

1. System zum Inphaseschalten von numerischen Folgen, enthaltend einen Vergleicher, einen an den Ausgang des Vergleichers angeschlossenen ersten Speicher, einen zweiten Speicher (2) und einen Oszillator (3), die beide an den Eingang des ersten Speichers (4) angeschlossen sind, während der Eingang des zweiten Speichers (2) an den Ausgang des Vergleichers (1) angeschlossen ist, einen ersten Zähler (6), der mit einem Eingang an den Ausgang des ersten Speichers (4) angeschlossen ist, eine Weichenschaltung (9), die mit einem Eingang an den Ausgang des ersten Zählers (6) angeschlossen ist, einen zweiten Zähler (7), der mit einem Ausgang an den anderen Eingang des ersten Zählers (6) angeschlossen ist, einen Phasendiskriminator (11), - eine Entscheidungsschaltung (8), die mit einem Eingang an den Ausgang des Phasendiskriminators (11), mit einem weiteren Eingang an den zweiten Zähler (7), mit einem Ausgang an einen weiteren Eingang der Weichenschaltung (9) und mit einem weiteren Ausgang an einen Eingang des zweiten Zählers (7) angeschlossen ist, während ein weiterer Eingang des zweiten Zählers (7) an den Ausgang des ersten Zählers (6) angeschlossen ist.

2. System zum Inphaseachalten von zwei numerischen Folgen, die identische Datenaignale und Taktsignale gleicher Frequenz umfassen, enthaltend eine Einrichtung, um aus den Datensignalen aufeinanderfolgende Pakete mit einer bestimmten Anzahl von Bits zu bilden, eine Einrichtung, um je Bitpaket die Koinzidenz von den Datensignalen zu vergleichen und bei der ersten Nicht-Koinzidenz in einem Paket ein Nicht-Koinzidenzsignal (NoCo) auszusenden, eine Einrichtung, um die Pakete zu zählen, die mindestens eine Nicht-Koinzidenz enthalten, und am Ende einer bestimmten Anzahl solcher Pakete ein Signal für die unrichtige Phasenrelation von Datenaignalen (ABSCORR) auszusenden, eine Einrichtung, um die Phasen der Taktsignale zu messen und, wenn innerhalb einer bestimmten Zeit kein Nicht-Koinzidenzsignal (NoCo) ausgesandt worden ist, ein Signal für die unrichtige Phasenrelation der Taktsignale (ABSPHA) auszusenden,wenn die Phasen der Taktsignale nicht zusammenfallen, und eine Einrichtung, um ein Phasenänderungssignal (PAP) entweder beim Auftragen eines Signales für die unrichtige Phasenrelation der Datensignale (ABSCORR) oder beim Auftreten eines Signales für die unrichtige Phasenrelation der Taktsignale (ABSPHA) auszusenden.

3. Kommutationssystem, das das System zum Inphaseschalten gemäß einem der Ansprüche 1 und 2 enthält, mit einem Phasenänderungsglied (13), um die Phase der numerischen Hilfsfolge nach dem Empfang jedes Phasenänderungs-Anfragesignals (PAP) zu verändern.

4. Kommutationssystem, nach Anspruch 3, dadurch gekennzeichnet, daß das Phasenänderungsglied (13) in der Lage ist, die Phase der numerischen Hilfsfolge diskontinuierlich zu verändern.

5. Kommutationssystem, nach Anspruch 4, dadurch gekennzeichnet, daß die Veränderung der Phase der numerischen Hilfsfolge sich sprungweise in Schritten von

$$\frac{i\,u}{p}$$

verändert, wobei p eine vorgegebene ganze Zahl im Anschluß an die Anfrage jedes Phasenänderungssignales (PAP) ist, während iu gleich der Periode eines Synchronisationssignales (Hi) ist.

6. Kommutationssystem nach Anspruch 4, dadurch gekennzeichnet, daß die diskrete Reihenfolge der veränderlichen Phasen in Vorwärtsrichtung durchlaufen wird und dann in Inneren eines vorgegebenen Bereiches in verzögerter Richtung.

**Claims**

1.- Digital trains phasing system, comprising a comparator having an output, a first memory connected to the comparator output, a second memory (2) and an oscillator (3) both connected to the first memory input, the second memory input being connected to the comparator output, a first counter (6) connected by an input to the first memory output, a switching circuit (9) connected by an input to the first counter output, a second counter (7) connected by an output to the first counter other input, a phase discriminator (11), a decision circuit (8) connected by an input to the phase discriminator output, by another input to the second counter (7), by an output to another input of the switching circuit (9) and by another output to an input of the second counter (7), another input of the second counter (7) being connected to the output of the first counter (6).

2.- System for phasing two digital trains containing identical data signals and clock signals of same frequency, comprising means for forming, from the data signals, successive packets of a determined number of bits, means for comparing by packets of bits the coincidence of the data signals and for emitting a non-coincidence signal (NoCo) upon the first non-coincidence in a packet, means for counting the packets comprising at least a non-coincidence and for emitting a poor data signal phase signal (ABSCORR) as soon as there have been a determined number of such packets, means for measuring the clock signal phases and, if no non-coincidence signal (NoCo) has been emitted during a determined time, emitting a poor clock signal phase signal (ABSPHA) if the phases of the clock signals do not match, and means for emitting a phase change signal (PAP) upon the appearance of either a poor data signal phase signal (ABSCORR) or an poor clock signal phase signal (ABSPHA).

3.- Switching system comprising the phasing system of one of claims 1 and 2 and a phase change device (13) for varying the phase of the backup digital train upon reception of each phase change demande signal (PAP).

4.- Switching system of Claim 3, wherein the phase change device (13) is arranged for varying the phase of the backup digital train discontinuously.

5.- Switching system of Claim 4, wherein the variation of the phase of said backup digital train changes by jump of step equal to

$$\frac{iu}{p} ,$$

p being an integer which is predetermined further to the demand of each phase change signal (PAP) and iu being equal to the period of a synchronization signal ($H_i$).

6.- Switching system of Claim 4, wherein the discrete sequence of the variable phases is passed over in a direction of advance, then in a direction of delay within a predeetermined range.

FIG.1

0 064 923

FIG. 2

0 064 923

Hi

$D'_{i_t}$ | $b_0$ | $b_1$ | $b_2$ | $b_3$ | $b_4$ | $b_5$ | $b_6$ | $b_7$ | $b_8$ | $b_9$ | $b_{10}$ | $b_{11}$ | $b_{12}$ | $b_{13}$ | $b_{14}$ | $b_{15}$ | $b_{16}$ | $b_{17}$ | $b_{18}$ | $b_{19}$ | $b_{20}$ | $b_{21}$ | $b_{22}$ | $b_{23}$ | $b_{24}$ | $b_{25}$ | $b_{26}$ | $b_{27}$

$Dx_t$ | $b_0$ | $b_1$ | $b_2$ | $b_3$ | $b_4$ | $b_5$ | $b_6$ | $b_7$ | $b_8$ | $b_9$ | $b_{10}$ | $b_{11}$ | $b_{12}$ | $b_{13}$ | $b_{14}$ | $b_{15}$ | $b_{16}$ | $b_{17}$ | $b_{18}$ | $b_{19}$ | $b_{20}$ | $b_{21}$ | $b_{22}$ | $b_{23}$ | $b_{24}$ | $b_{25}$ | $b_{26}$ | $b_{27}$

h

1 paquet

DIV

.PER

NOCO

**FIG. 3**

n

NOCO

INIT $t_1$

ABSCORR

**FIG. 4**

PAP

N

ABSPHA

9

8

12

ABSCORR

T TEST

6

INIT

7

NO CO

REC

4

h

PER

5

N

DIV

3

2

Partie rapide

Partie lente

FIG.5

1

10

$\varnothing_o$

11

$D'i_\tau$
$Dx_\tau$
$H_i$

$T\tau i$

$H'i_\tau$
$Hx_\tau$

FIG. 6

FIG.7

FIG. 8

FIG. 9

0 064 923

FIG. 10

| a | b | c | Circuit de retard non bloqué |
|---|---|---|---|
| 0 | 0 | 0 | 166 |
| 1 | 0 | 0 | 167 |
| 1 | 1 | 0 | 168 |
| 0 | 1 | 0 | 169 |
| 0 | 1 | 1 | 170 |
| 1 | 1 | 1 | 171 |
| 1 | 0 | 1 | 172 |
| 0 | 0 | 1 | 173 |

# FIG.11

FIG.12

période allongée

0 064 923

FIG. 13

FIG. 14

FIG.15

FIG. 16